# EUROPEAN PATENT APPLICATION

(11) **EP 1 332 795 A1**
(43) Date of publication of application: **06.08.2003**
(21) Application number: 02290241.5
(22) Date of filing: 01.02.2002
(51) Int. Cl.: B01J 21/08, B01J 37/03, C01B 37/00, C01B 37/02, C10G 45/46, C10G 45/60

(54) **New porous silicate materials and their uses as catalytic systems for diesel improvement**

(71) Applicant: CENTRE NATIONAL DE LA RECHERCHE SCIENTIFIQUE (CNRS), 75016 Paris (FR); Université de Montpellier II, 34095 Montpellier Cedex 5 (FR); Universidad Malaga, 29071 Malaga (ES); REPSOL PETROLEO S.A., 28045 Madrid (ES); Consorzio Interuniversitario Nazionale Per La Scienza E Tecnologia Dei Materiali (INSTM), 50132 Firenze (IT)
(72) Inventor: Roziere, Jacques, 34090 Montpellier (FR); Jones, Deborah, 34090 Montpellier (FR); Jacquin, Mélanie, 34170 Castelnau Le Lez (FR); Jimenez-Lopez, Antonio, Grenada (ES); Rodriguez-Castellon, Enrique, 29130 Malaga (ES); Maireles-Torres, Pedro, 29009 Malaga (ES); Trejo-Menayo, José-Manuel, 28028 Madrid (ES); Vaccari, Angelo, 40127 Bologna (IT); Lenarda, Maurizio, 30100 Venezia (IT); Busca, Guido, 16143 Genova (IT)
(74) Representative: Jacobson, Claude

(57) **Abstract**

2) Multifunctional silicon-based porous catalytic system comprising at least one porous catalytic support structurally comprising silica and at least one other metal or non-metal oxide chosen from aluminium, zirconium, and boron, said catalytic support being synthesised together with one or more surface active agents, and at least one or more catalyst chosen from among metallic elements of columns 8, 9 and 10 of the periodic table of the elements.

3) The catalytic systems are useful in hydrogenation and/or decyclisation reactions of (poly)aromatic compounds, especially for improving the quality of diesel fuels and increasing their cetane number.

## Description

### Field of the invention

The present invention relates to new multifunctional catalysts and a process for aromatics hydrogenation and decyclisation of a hydrocarbon feedstock, wherein the catalyst is comprised of a metal of groups 8, 9 or 10 of the periodic table, or a combination thereof, on a porous acidic metallo- or borosilicate, prepared in the presence of surface active agents, which process leads to improved diesel fuels with higher cetane number.

### Background of the invention

For many years, catalytic systems have been developed for use in various chemical reactions. Catalytic systems generally comprise one or more catalysts and a support, which support often plays a major role in specific chemical reactions.

For example, porous supports have been developed because of their high specific surface area allowing a better contact between the reactants and the catalyst. Such known catalytic systems are for example disclosed in EP 519 573, WO98/35754 and US 5,308,814 where the supports are essentially zeolite materials, or materials that are based on amorphous alumina or silica alumina.

The size of the pores as well as their respective organisation within the structure of the support is of high importance. Depending on the type of reactions, the pores must have a greater or smaller average size diameter. The pores may be more or less structurally organised (crystalline / amorphous material) thereby leading to more or less complex pathways within the support (tortuosity).

The acidity of the support is also of great importance. Depending on the type of reactions, the acidity must be of Brønsted of Lewis type, or a mixture thereof and the acid sites must be present in appropriate number and strength.

More specifically, such porous materials have already been widely used for hydrogenation reactions as well as for decyclisation of (poly)aromatic compounds.

These reactions are particularly important in the process of improving the quality of various fuels, e.g. diesel fuels. "Cetane number" is the commonly recognised unit used in the appreciation of the quality of diesel fuels. To a high quality of diesel fuel corresponds a high cetane number, this number being lower for diesel fuels of lower quality.

For environmental and ecological reasons, governmental regulations are more and more severe and have requested in the year 2000 that cetane number for diesel fuels should not be beyond 51. This number should not be beyond 56 in 2005.

Diesel fuels with low cetane number generally comprise a certain amount of (poly)aromatic compounds. Therefore, one possible method used for increasing the cetane number, thus improving the quality of diesel fuels, consists of reducing the amount of these (poly)aromatic compounds. This may be achieved through catalytic hydrogenation and/or decyclisation reactions on the aromatic components of the fuels.

Such methods and technologies are already known and are based on processes using catalytic systems which combine the acidic character of the catalyst support and the hydrogenation and decyclisation activity of the catalytic metals. See for example, A. Corma et al. (Journal of Catalysis, 169, (1997), 480-489) wherein silicoaluminate catalytic supports are prepared according to WO91/11390, i.e. using ionic surface active agents as directing agents.

However, among all known materials that are currently used at present in catalytic reactions aiming the improvement of the cetane number, many of them also lead to non desirable non-selective cracking side reactions, which are generally considered to result from an inappropriate acidity of the support. There exists a competition between the hydrogenation and decyclisation activity of the catalytic metals (promoting an increase of the cetane number) and the acidic character of the support (promoting hydrocracking side-reactions responsible for a loss of product yield).

Therefore there is an important need to develop porous systems, the acidity of which is strong enough in order to promote reactions leading to the improvement of diesel fuel quality, but sufficiently low in order to limit the level of light hydrocarbon fractions produced by hydrocracking side reactions.

It is also important that catalysts used in such reactions are the least sensitive possible to sulphur containing compounds, insofar as the fuel feedstock is contaminated by sulphur-containing molecules.

Despite the great number of catalysts which can be useful for hydrogenation and decyclisation reactions, none of them has been found completely satisfactory, since the increase in the cetane number of diesel fuels is accompanied by loss of product due to the formation of light molecules by cracking. The already known zeolite materials, such as for example zeolite Y, are particularly non satisfactory in this respect.

Therefore, there is still a need for more efficient catalytic systems, which can obviate the above listed problems and lead to high quality fuels.

A first objective of the present invention is to solve one or more of the problems discussed in the above description.

Another objective of the present invention relates to new catalytic systems providing high conversion rates in hydrogenation and decyclisation reactions of (poly)aromatic components together with a high selectivity for these reactions.

According to a further objective, the present invention provides multifunctional silica-based catalytic systems, which are the least sensitive possible to sulphur poisoning.

Still another object of the invention consists in providing diesel fuels of improved quality, and of increased cetane number.

It has now been surprisingly found that the above objectives can be met in whole or in part with the process and catalytic systems of the present invention.

### Summary of the invention

Therefore, and according to a first aspect of the invention, there is provided a new process of preparation of silicon-based multifunctional catalytic systems comprising the steps of:
a) adding a hydrolysable silicon-containing compound to a solution of one or more surface active agent(s) in an appropriate concentration, optionally comprising another metallic- or non-metallic-containing compound to provide hetero-atom doped, partially substituted silica, and optionally one or more organic or inorganic additive(s) and adjusting the pH to an appropriate value;
b) optionally placing the obtained solution under vacuum until a gel is obtained or, alternatively, stirring the precipitate formed;
c) optionally submitting the obtained gel or precipitate to hydrothermal treatment;
d) drying the gel or precipitate formed;
e) withdrawing the surface-active agent so that a catalytic support is obtained; and
f) intimately admixing one or more metal, preferentially of the groups 8, 9 and 10 of the periodic classification of the elements into the catalytic support, this very step possibly being included within step a).

In a second aspect, the present invention provides new silicon-based multifunctional porous catalytic systems with controlled porosity and acidity, comprising a supermicroporous or mesoporous support and one or more metals chosen from among groups 8, 9 and 10 of the periodic table of the elements, said catalytic systems being useful in hydrogenation and decyclisation reactions of (poly)aromatic compounds.

According to a further aspect, the invention also relates to the use of such catalytic systems in hydrogenation and decyclisation of aromatic and/or (poly)aromatic compounds with higher efficiency and selectivity at lower temperatures than those observed with conventional known porous catalysts.

### Detailed description of the invention

The present invention provides a preparation process of silicon-based (silicate or siiicoaluminate or silicozirconate) porous materials useful as catalytic supports for metallic catalysts. The porous materials are "supermicroporous" (average pore diameter ranging from about 1.4 to about 2.0 nm) and/or "mesoporous" (average pore diameter greater than about 2 nm and less than about 10 nm, preferably less than about 5 nm).

In a first step, a hydrolysable silicon-containing compound is dissolved into one or more surface active agent(s), leading to a final structure characterised by a narrow distribution of pores as indicated by a full width at half maximum in the pore size distribution of 1 to 1.5 nm, and presenting at least a certain degree of organisation in general shown by the presence of at least one low-angle X-ray diffraction peak. "Low angle", in the present context, means a diffraction peak at a position corresponding to a d-spacing of 3 to 10 nm, preferably between 3 nm and 6 nm, and more preferably between 3.5 nm and 5 nm.

The use of surface active agents during the preparation of the support allows a control of the porosity of the resulting catalytic system. One or more surface active agents may be used for the preparation of the above described catalytic supports and may be of all types known by the skilled artisan in the art.

Such surface-active agents are for example chosen from all known ionic (cationic, anionic and zwitterionic) and non-ionic surface active agents, preferably non-ionic surface active agents, and from all known monomeric, oligomeric and polymeric surface active agents. Mixtures of surface-active agents of one type or of different types may also be used in the process according to the invention.

Examples of known non-ionic surface active agents include natural and synthetic agents, e.g. alkyl-poly(oxyethylene) glycols, and are for example Tergitol 15-S-9, Tergitol 15-S-12 (Sigma), Brij 30, Brij 52, Brij 56 (Aldrich Chemicals), Simulsol P8, Simulsol 575, Simulsol 830, Simulsol 1230, Montanox 20, Montanox 80, Montanox 85, Octarox 1030, dodecylphenol PEO4, dodecylphenol PEO 5, dodecylphenol PEO 7, dodecylphenol PEO 10 (Seppic), poly(ethylene glycol)-block-poly(propylene glycol)-block-poly(ethylene glycol) block co-polymers, such as Pluronic 123 (Aldrich Chemicals).

Examples of ionic surface active agents that may also be useful for the present invention include for example hexadecyltrimethylammonium bromide (Aldrich), dodecyltrimethylammonium bromide (Sigma), octadecyltrimethylammonium bromide (Sigma).

Other ionic and non ionic surface active agents, as well as long-chain alcohols such as hexadecanol may also be used for the preparation of the catalytic systems of the invention.

The nature of the surface-active agent used in the preparation process allows a perfect control of the porosity of the porous material. Depending on the size and the respective dimensions of the hydrophobic and hydrophilic parts of the surface-active agent, the size of the pores of the catalytic support can be finely tuned.

The use of surface-active agents also allows the dispersion into the reaction mixture of metallic salts, thereby facilitating the incorporation, within the framework or the porous structure of the porous material, of hetero-elements, such as those of groups 8, 9, and 10 of the periodic table of the elements.

The surface active agent may advantageously be dissolved in an acidic medium prior to the addition of the hydrolysable silicon-containing compound. Examples of appropriate acidic media include strong mineral acids, preferably hydrochloric, sulphuric and nitric acid, more preferably nitric acid of various concentrations in water, for example about 0.1 M.

The concentration of the surface active agent in solution is advantageously greater than about 20 % by weight, preferably greater than about 30%, and generally between about 30 and 60 % by weight.

To this surface active agent solution is added an amount of a hydrolysable compound containing silicon. This compound is actually a source of silicon, which can be easily released into the surface active agent solution. A good example of hydrolysable silicon-containing compound is tetraethoxysilane (TEOS) or tetramethoxysilane (TMOS). Other source or mixtures of different sources of silicon may of course also be used.

If desired, and where appropriate, the porous catalytic support may contain, beside silicon, one or more other metallic or non-metallic elements, such as aluminium, zirconium, boron, and the like. In these cases, the obtained porous material is respectively a silicoaluminate-, a silicozirconate- or borosilicate-based material. Such other element(s) are added (preferably before the addition of the silicon containing compound) to the surface-active agent as inorganic salts, generally in a hydrate form, e.g. those of aluminium trinitrate (Al(NO₃)₃), zirconyl nitrate (ZrO(NO₃)₂), zirconyl chloride (ZrOCl₂) or organometallic compounds, e.g. zirconium tetrapropoxide, boron methoxide, boron ethoxide.

Preferred catalytic supports according to the present invention comprise pure silica and aluminium oxide (silicoaluminate) and pure silica and zirconium oxide (silicozirconate).

Respective quantities of silicon-source compound and S-source compound (where S represents a metallic or non-metallic element, for example aluminium, zirconium, boron and the like) are such that, in the catalytic support, the molar ratio Si/S has a value of between about 1 and about 100, preferably of between about 2 and about 50. For a catalytic support comprising silicon and aluminium, this ratio is generally comprised between about 5 and about 40, preferably about 15 and about 25, for example about 20. When the catalytic supports contain silicon and zirconium, this ratio is generally comprised between about 2 and about 20, preferably about 5 and about 10, for example about 5.

The Si/S molar ratio, as well as the respective distribution and localisation of the Si and S atoms have a direct impact on the acidity of the catalytic system. This ratio may thus be adjusted to the desired value depending on the nature of the chemical reaction it will catalyse.

As regards the control of the porosity of the end product porous material, it may also be useful to add to the solution, one or more organic and/or inorganic additives. Organic additives include for example 1,3,5-trimethylbenzene and 1,3,5-triethylbenzene. As inorganic additives, it may be cited inorganic salts, such as for example lithium nitrate. Organic and/or inorganic additives may be added to the surface active agent solution before or after the addition of the silicon containing compound. Organic additives are advantageously added before the silicon containing compounds; the inorganic additives are preferably added after the silicon containing compound.

Another important factor on which depends the porosity of the porous support is the reaction temperature used for the preparation of said support. This temperature is generally comprised between about 20 and about 150°C, preferably between about 20 and 80°C, for example 25°C.

The obtained mixture is then optionally placed (step b)) into a hermetic vessel to which a dynamic vacuum is applied during a sufficient period, allowing the elimination of volatile compounds that are formed during the reaction, e.g. during a period ranging from 30 to 240 min., preferably 90 to 180 min. Vacuum is preferably maintained until a solid product is obtained, generally in the form of a gel.

The obtained solid product, in the form of a gel or a powder, is then optionally treated hydrothermally (step c)) at a temperature preferably comprised in the range of 80 to 130°C, for example 100°C, for up to 1 week, preferably for about 24 to 72 hours, for example 48h.

The gel is then dried in step d) at appropriate temperature and during a sufficient time so that, preferably, a transparent, auto supported, monolithic block is obtained. For example, temperatures of between 15 and 80°C and/or periods of time of about 2 to 5 days, preferably during 3 days, are satisfactory.

The surface active agents may be eliminated in step e) from the pores of the structure either by thermal or chemical way. In the first case (thermal removal), the surface-active agent is gradually expelled from the pores as the support is progressively heated. For example, the material is placed into an oven, which is progressively heated (e.g. about 0.5°C to 5°C per minute, e.g. 2°C per minute), until a temperature of between 400°C and 700°C is reached, preferably between 450°C and 650°C, for example 560°C, the temperature of the oven being maintained until the complete elimination of the surface active agent.

By chemical extraction, the surface active agent is run into an appropriate solvent, such as ethanol, but another solvent or mixtures or solvents may be used. This extraction may be realised between room temperature and the boiling point of the solvent. Preferably, the material is covered with ethanol and placed under agitation until the totality of the surface active agent is extracted by the solvent. Agitation may thus be maintained during from 2 to 24 hours, for example, 12 hours. It may also be useful to add solvent, for example every 2 hours.

The above described preparation methods generally lead to the formation of monolithic, film or powder porous materials, preferably monolithic porous materials. In this latter case the catalytic supports are directly obtained in the desired and appropriate form usable in the catalytic reactions, thus avoiding any further shaping such as moulding or extrusion.

Catalytic material(s), such as catalytic metals may be intimately admixed to the above-described catalytic support. This may be achieved by various methods including ionic exchange, incorporation, impregnation, adsorption and the like. Depending on the method, the catalytic material(s) may be added to the support during its preparation, or once the catalytic support is formed and is substantially free of remaining surface-active agent.

Catalytic material(s) include metal(s) that are conveniently used in catalytic reactions, preferably hydrogenation and decyclisation of (poly)aromatic compounds. Metals are advantageously chosen from groups 8, 9 and 10 of the periodic classification of the elements. Preferably, appropriate metals are chosen from iron, cobalt, nickel, ruthenium, rhodium, palladium, osmium, iridium, and platinum. Preferred metals include nickel, rhodium, palladium, platinum, ruthenium and iridium, more preferably palladium, rhodium and platinum. One or more metals can be present in the catalytic system. Specially preferred are mixtures of palladium and platinum (Pd/Pt), and palladium and rhodium (Pd/Rh). Mixtures of metals are preferred although metals used alone may also be advantageously used. Molar ratios of catalytic metals may vary to a great extent, although molar ratios of Pd/Pt or Pd/Rh comprised between 0.5 and 10 are advantageously used. For example, Pd/Pt molar ratios of about 4:1 to about 6:1 and Pd/Rh molar ratios of about 1:1 gave good results.

According to the present invention, three different methods are preferably used for intimately combining the support and the catalytic component(s): ionic exchange, direct incorporation and impregnation although other known methods may be adapted.

The first method (ionic exchange) uses the capacity of the material to exchange ions which are introduced by the partial substitution of silicon by hetero elements, that is to say, ionic exchange with metal cations or complexed metal cations of formula [M(NH₃)₅Cl]²⁺, or M(NH₃)₄²⁺, for example, in which M represents a metal chosen from the elements of groups 8, 9 and 10 of the periodic classification of the elements.

The second method (direct incorporation) is more specifically used with supports prepared with non-ionic surface active agents. This method indeed takes benefits from the dispersion properties of these non-ionic surface active agents towards metallic salts or metal complexes such as pentanedionate (acetyl acetonate), nitrate, and chloride. The end product catalytic system (catalytic support and metals dispersed therein) is obtained in a one step reaction. This direct incorporation method has a direct effect on the size and the dispersion of the metallic particles as well as on their high resistance towards sulphur poisoning.

The third method is based on the impregnation of metallic salts, for example using solutions of metallic chlorides or nitrates.

Preferred methods useful for obtaining a high level of dispersion are ionic exchange and impregnation methods, more preferably impregnation method. Other known methods in the art useful for intimately admixing the catalytic metal or metals with the support may also be used.

The total amount of metals is advantageously comprised between 0.01% and 10% by weight of the porous support, preferably between 0.1% and 5% by weight, and more preferably between 0.5% and 2% by weight. However, when nickel is the catalytic metal, alone or in association with one or more other metals, the overall amount of metals may be comprised between 5% and 50% by weight, preferably between 20% and 40%, more preferably between 10% and 30%.

The catalytic systems according to the invention may finally be calcined in an oven, e.g. at a temperature of about 400°C to about 600°C, and/or during about 1 to 6 hours.

The present invention also provides multifunctional silicon-based porous catalytic systems comprising:
- at least one porous catalytic support structurally comprising silica and at least one other metal or non-metal oxide chosen from aluminium, zirconium, and boron, said heteroatom-doped silica catalytic support being synthesised together with one or more surface active agents, provided that the surface-active agent useful in the preparation of a silicoaluminate porous support is a non-ionic surface-active agent;
- and at least one or more catalyst chosen from among metallic elements of columns 8, 9 and 10 of the periodic classification of the elements.

The catalytic support, prepared together with a surface-active agent, is a porous material, and more specifically a supermicroporous or mesoporous material, that is to say a porous material wherein the average diameter of the pores has a value from about 1.4 nm to about 2.0 nm (supermicroporous material) and/or has a value from about 2 nm to about 5 nm (mesoporous material). The support is further characterised by a narrow distribution of pores, as indicated by a full width at half maximum in the pore size distribution of 1 nm to 1.5 nm and presenting at least a certain degree of organisation (X-ray diffraction peak), in general shown by the presence of at least one low-angle X-ray diffraction peak. "Low angle", in the present context, means a diffraction peak at a position corresponding to a d-spacing of 3 to 10 nm, preferably between 3 and 6 nm, and more preferably between 3.5 and 5 nm.

Surface-active agents useful for the preparation of the catalytic systems according to the invention may be ionic or non-ionic and may be monomeric, oligomeric or polymeric surface-active agents, such as for example those described in the above description. Preferred catalytic systems are those wherein the support is prepared with non-ionic surface-active agents.

In the catalytic support, the molar ratio Si/S (where S represents the other metal chosen from aluminium, zirconium, boron, and the like) has a value of between 1 and 100, preferably of between 2 and 50. For catalytic support comprising silicon and aluminium, this ratio is generally comprised between 5 and 40, preferably 15 and 25, for example 20. When the catalytic supports contain silicon and zirconium, this ratio is generally comprised between 2 and 20, preferably 5 and 10, for example about 5.

Preferably, the catalytic supports comprise pure silica and aluminium oxide (silicoaluminate material, Si/Al) or pure silica and zirconium oxide (silicozirconate material, Si/Zr).

The catalytic system according to the present invention further comprises one or more catalysts that are advantageously chosen from among metals of groups 8, 9 and 10 of the periodic table of the elements. Preferably, appropriate metals are chosen from iron, cobalt, nickel, ruthenium, rhodium, palladium, osmium, iridium, and platinum. Preferred metals include nickel, rhodium, palladium, platinum, ruthenium and iridium, more preferably palladium, rhodium and platinum. One or more metals can be present in the catalytic system. When used for catalytic reactions involving diesel feedstock containing a fairly high amount of sulphur contaminants, palladium-based catalysts are preferred, since those ones are more resistant to sulphur poisoning. Specially preferred catalysts are mixtures of palladium and platinum (Pd/Pt), and palladium and rhodium (Pd/Rh). Mixtures of metals are preferred although metals used alone may also be advantageously used.

In the catalytic systems of the present invention, the total amount of metals is advantageously comprised between 0.01% and 10% by weight of the porous support, preferably between 0.1% and 5% by weight, and more preferably between 0.5% and 2% by weight. However, when nickel is the catalytic metal, alone or in association with one or more other metals, the overall amount of metals may be comprised between 5% and 50% by weight, preferably between 20% and 40%, more preferably between 10% and 30%.

Catalytic systems according to the invention may also present a specific acidity level, which is particularly important for hydrogenation and decyclisation of (poly)aromatic compounds. This acidity level may be assessed by many different methods known to those skilled in the art, for example by the evaluation of the number of µmoles of ammonia (NH₃), which are chemically adsorbed per gram of catalytic support. Preferred acidity levels are comprised within the range of 200 to 600 µmol NH₃/g, more preferably between 250 and 500 µmol NH₃/g.

Preferably, the catalytic systems of the present invention comprise a silicoaluminate-based porous catalytic support and at least one catalytic material with one or more of the following characteristics taken alone or in combination:
- the Si/Al molar ratio is comprised between 5 and 40, preferably 15 and 25, for example 20;
- the surface-active agent used in the preparation of the support is a non-ionic surface-active agent;
- the average diameter of the pores has a value from about 1.4 nm to about 2.0 nm (supermicroporous material) and/or from about 2 nm to about 5 nm (mesoporous material);
- the catalytic material comprises palladium and platinum or rhodium in an overall amount of between 0.1% and 5% by weight, and more preferably between 0.5% and 2% by weight of the catalytic support, and with a Pd/Pt molar ratio of between 4:1 to 6:1 or a Pd/Rh molar ratio of about 1:1;
- the catalytic system shows an acidity level of 200 to 600 µmol NH₃/g, more preferably between 250 and 500 µmol NH₃/g.

Alternatively, the catalytic systems of the present invention comprise a silicozirconate-based porous catalytic support and at least one catalytic material with one or more of the following characteristics taken alone or in combination:
- the Si/Zr molar ratio is comprised between 2 and 20, preferably 5 and 10, for example about 5;
- the surface-active agent used in the preparation of the support is a non-ionic or ionic surface-active agent;
- the average diameter of the pores has a value from about 1.4 nm to about 2.0 nm (supermicroporous material) and/or from about 2 nm to about 5 nm (mesoporous material);
- the catalytic material comprises palladium and platinum or rhodium in an overall amount of between 0.1% and 5% by weight, and more preferably between 0.5% and 2% by weight of the catalytic support, and with a Pd/Pt molar ratio of between 4:1 to 6:1 or a Pd/Rh molar ratio of about 1 :1;
- the catalytic system shows an acidity level of 200 to 600 µmol NH₃/g, more preferably between 250 and 500 µmol NH₃/g.

Particularly preferred are catalytic systems comprising a silicoaluminate support having a Si/Al molar ratio of about 20, prepared using a non-ionic surface-active agent, and further comprising a mixture of palladium and platinum in a molar ratio of between 4:1 to 6:1, the overall content of metal being 1 to 2% by weight of the catalytic support.

Other preferred catalytic systems are those comprising a silicoaluminate support having a Si/Al molar ratio of about 20, prepared using a non-ionic surface-active agent, and further comprising a mixture of palladium and rhodium in a molar ratio of about 1:1, the overall content of metal being 1 to 2% by weight of the catalytic support.

Still other preferred catalytic systems are those comprising a silicozirconate support having a Si/Zr molar ratio of about 5, prepared using an ionic surface-active agent, and further comprising a mixture of palladium and platinum in a molar ratio of about 6:1, the overall content of metal being 1% by weight of the catalytic support.

The present invention further relates to a catalytic process of hydrogenation and/or decyclisation of (poly)aromatic compounds, using the above described catalytic system or using a catalytic system substantially obtained according to the preparation process of the invention. Such reactions are conducted according to known methods available in the art.

It has been surprisingly found, that using the catalytic systems of the invention, non desirable hydrocracking side-reactions are substantially not observed, or appear in reasonable amounts. Such hydrocracking side-reactions are indeed damageable when they occur during hydrogenation and decyclisation of (poly)aromatic compounds, especially present in fuels, more especially in diesel fuels. Such side-reactions for example represent a severe hurdle when efficiency and selectivity is sought for the preparation of diesel fuels with increased cetane number.

Catalytic systems of the present invention are more appropriately used in hydrogenation and/or decyclisation reactions on fuel feedstock although they may be used in any chemical reactions requesting finely divided catalytic materials, especially, metallic catalysts such as those of groups 8, 9 and 10 of the periodic classification of the elements.

Fuel feedstock, and especially diesel feedstock may be, but not necessarily, hydrotreated prior to the hydrogenation and/or decyclisation reaction, in order to reduce its sulphur content to reasonable levels.

The catalytic systems of the invention have been found to be very efficient in reducing the (poly)aromatic compounds of fuel feedstock, at temperatures lower than the skilled artisan is used to, and in a very selective way. The catalytic systems therefore find very efficient and attractive uses in the preparation of improved diesel fuels with increased cetane number.

According to the process of the present invention, diesel fuels are in a first step optionally hydrotreated in order to reduce the sulphur content so that the catalytic metals are not totally poisoned. Hydrotreatment is a well-known in the art method, and is useful in reducing the sulphur content to levels of less than 50 ppm, starting from crude feedstock with e.g. sulphur contents of about 20,000 ppm.

Before the hydrogenation and/or decyclisation reaction, the catalytic systems of the present invention, which may be used alone or diluted with inert materials, carborundum for example, are advantageously dried under inert gas flow, preferably nitrogen flow, and then activated and stabilised with hydrogen, at high temperatures ranging e.g. from 120°C to 500°C, preferably about 400°C for the activation and about 270°C to 300°C for the stabilisation.

Once prepared as indicated here-above, the catalytic systems of the present invention, as compared with known porous catalytic systems, allow reactions with higher efficiency and higher selectivity when conducted at lower temperatures, thereby leading to diesel fuels of improved quality, especially with increased cetane number. By way of example, the cetane number increased by about 8 points at a temperature of 300°C, representing an improvement of about 20% to about 25% with respect to the hydrotreated feedstock, after the hydrogenation and decyclisation reaction with the catalytic systems of the invention was conducted. Such diesel fuels with increased cetane number are also part of the present invention.

The present invention is further explained and described in the following examples, which in no way bring any limitation but rather illustrate the various aspects of the invention.

### Example 1: Preparation of a catalytic support

Non-ionic surface active agent (50 g) is dissolved into 50 g of 0.1 M nitric acid. Tetraethoxysilane (TEOS, 0.25 moles per mole of water present in the solution) is added and the solution is maintained under agitation until complete dissolution of tetraethoxysilane. Aluminium nitrate (Al(NO₃)₃.9H₂O) is added prior to TEOS. The amount of Al(NO₃)₃.9H₂O is such that the desired molar ratio Si/Al is obtained. Where appropriate, lithium nitrate may also be added prior to TEOS. The reaction mixture is placed under dynamic vacuum during 90 to 180 min., in order to withdraw the ethanol formed during TEOS hydrolysis. Vacuum is maintained until solidification of the mixture and a gel is obtained. The gel is then dried at a temperature of between 15 and 80°C during about 2 to 5 days, and preferably during 3 days. The obtained material is a monolithic block-shaped transparent material.
Surface active agent is then eliminated by calcination in air using a heating rate of 1°C/min up to 560°C followed by isothermal treatment at this temperature for 10 h.

The following table (I) gives examples of some catalytic supports obtained with the here-above method. These examples have been chosen in order to better underline the influence of the various preparation parameters on the BET surface (specific area) and the average pore diameter of the support.

**- TABLE I -**

| **Surface active agent trade name** | **Chemical formula** | **Si/Al** | **Reaction temperature** | **BET Surface Area (m**^{**2**}**g**^{**-1**}**)** | **Average pore diameter (nm)** |
|---|---|---|---|---|---|
| Brij 30 | C₁₂H₂₅(OCH₂CH₂)₄OH | 20 | 25 | 999 | 2.6 |
| Brij 30 | C₁₂H₂₅(OCH₂CH₂)₄OH | 20 | 50 | 903 | 2.1 |
| Brij 52 | C₁₆H₃₃(OCH₂CH₂)₂OH | 20 | 25 | 940 | 3.1 |
| Brij 56 | C₁₆H₃₃(OCH₂CH₂)₁₀OH | 20 | 25 | 863 | 2.2 |
| Tergitol 15-S-9 | C₁₁₋₁₅H₂₃₋₃₁(OCH₂CH₂)₉OH | 20 | 25 | 681 | 1.7 |
| Tergitol 15-S-12 | C₁₁₋₁₅H₂₃₋₃₁(OCH₂CH₂)₁₂OH | 20 | 25 | 750 | 1.8 |
| Brij 30 | C₁₂H₂₅(OCH₂CH₂)₄OH | 10 | 25 | 957 | 2.6 |
| Brij 30 | C₁₂H₂₅(OCH₂CH₂)₄OH | 40 | 25 | 1159 | 2.7 |
| Brij 30 | C₁₂H₂₅(OCH₂CH₂)₄OH | ∞ | 25 | 1118 | 2.3 |

### Example 2: Study of the influence of the molar ratio Si/Al on the acidity level of the catalytic supports.

Samples of various catalytic supports have been prepared according to the preparation method presented at Example 1, using Tergitol 15-S-9 as non-ionic surface active agent, and 4 different Si/Al molar ratios.

The acidity level of four samples has been established as a function of the Si/Al ratio and is expressed as the number of chemically adsorbed µmoles of NH₃ per g of support. The results are shown in table (II) below.

**- Table II -**

| | | | | |
|---|---|---|---|---|
| Sample | Si/Al = 5 | Si/Al = 10 | Si/Al = 20 | Si/Al = 40 |
| Acidity (µmol NH₃/g) | 467 | 417 | 320 | 296 |

### Example 3: Direct incorporation of Pd/Pt into a Si/Al catalytic support (CAT I).

A Si/Al catalytic support is prepared according to the method described in example 1, but palladium(II) 2,4-pentanedionate, platinum(II) 2,4-pentanedionate and aluminium nitrate are added to the solution of Tergitol 1 5-S-9 surface active agent in nitric acid. The amount of the various components are calculated in order to obtain, after withdrawal of organic groups, a Si/Al molar ratio of 20 and an overall metal content of 2 %, with a Pd/Pt molar ratio equal to 4.

### Example 4: Impregnation of Pd/Rh on a catalytic support having a Si/Al molar ratio equal to 20 (CAT 2).

A catalytic support is prepared according to the procedure described at example 1, using Brij 30 as non-ionic surface active agent and a Si/Al molar ratio equal to 20. The surface active agent is eliminated by calcination (thermal method). A solution of palladium chloride (PdCl₂) and rhodium nitrate (Rh(NO₃)₃) is contacted with the sieved catalytic support. The amount of PdCl₂ and Rh(NO₃)₃ is such that the molar ratio Pd/Rh is equal to 1 and the overall content of the metal to the support is 2% by weight. The impregnated support is then dried and calcined at 500°C during 4 hours.

### Example 5: Impregnation of palladium/platinum on a catalytic support having a Si/Al molar ratio equal to 20 (CAT 3).

A catalytic support is prepared according to the procedure described at example 1, using Brij 30 as non-ionic surface active agent and Si/Al molar ratio equal to 20. The surface active agent is eliminated by calcination (thermal method).
A solution of palladium chloride (PdCl₂) and platinum chloride (PtCl₄) is contacted with the sieved catalytic support. The amount of PdCl₂ and Rh(NO₃)₃ is such that the molar ratio Pd/Pt is equal to 4 and the overall content of the metal to the support is 2 % by weight.
The impregnated support is then dried and calcined at 500°C during 4 hours.

### Example 6: Impregnation of palladium/platinum on a catalytic support having a Si/Zr molar ratio equal to 20 (CAT 4).

Hexadecyltrimethylammonium bromide (25 g) is dissolved into water (75 ml) at 80°C. To this solution are added TEOS and zirconium tetrapropoxide, the Si/Zr molar ratio being equal to 5 and the surface active agent / Si+Zr molar ratio being equal to 0.5. Tetramethylammonium hydroxide is added until a pH value of 10.5 is reached. The obtained product is in the form of a powder and is maintained under agitation at 25°C during 24 hours.
The precipitate is filtered off and washed with alcohol. The surface active agent is eliminated by calcination at 540°C. A solution of palladium chloride (PdCl₂) and hexachloroplatinic acid (H₂PtCl₆), with a Pd/Pt molar ratio of 6, and containing 1 % by weight of the overall amount of metals to the catalytic support, said solution being contacted to the calcined support. The impregnated support is finally dried and calcined at 450°C, at a heating rate of 0.7°C/min., during 4 hours.

The following Table III shows the various characteristics of the catalytic systems CAT 1, CAT 2, CAT 3, and CAT 4 obtained in the previous examples.

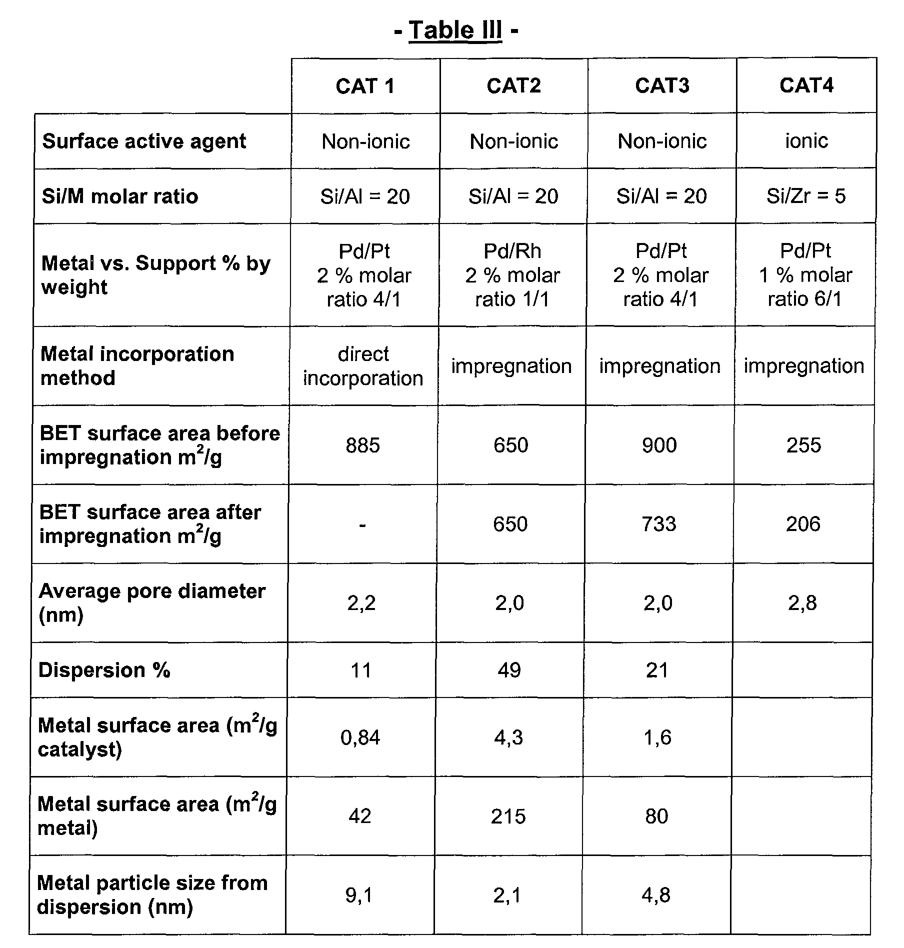

### Example 7: Study of catalytic properties of hydrogenation and ring-opening using a tetralin feedstock

The following studies were conducted on a tetralin feed stream using CAT3 (example 7a) of this invention, and comparative catalyst prepared according to US patent no. 5,308,814. This reference catalyst is noted CAT 5 (example 7b). A 3.0 mL portion of catalyst was loaded into a reactor. The catalyst was pre-reduced in flowing hydrogen (60 mL/min) at 6000 kPa at 450°C for 1 hour. The feedstock was passed over the catalyst at the conditions shown in Table IV. Example 7a reveals particularly high conversion to ring-opening products. Comparing examples 7a with 7b reveals a higher product yield for the former, as shown by the significantly lower values of the carbon balance. The carbon balance (Δ %) corresponds to an unwanted loss of product by the formation of low molecular compounds by non-selective cracking. Thus the catalyst of example 7a exhibits greater selectivity for ring-opening versus non-selective cracking than comparative catalyst CATS under identical conditions of test (See Table V below).

**- TABLE IV -**

| Operating conditions for tetralin conversion | |
|---|---|
| Feed stream | 10 % vol/vol tetralin in *n*-heptane, 0.30 mL/min |
| H₂ flow (mL/min) | 50 |
| LHSV (h⁻¹) | 6 |
| GHSV (h⁻¹) | 1000 |
| Ratio H₂/tetralin | 10.1 |
| Pressure (kPa) | 6000 |
| Temperature (°C) | 275 - 350 |
| Contact time(s) | 3.6 |

**- TABLE V -**

| Example | Catalyst | Reaction temperature (°C) | Conversion (%) | Hydrogenation products | Ring-opening products (%) | Carbon balance (Δ %) |
|---|---|---|---|---|---|---|
| 7a | CAT3 | 275 | 85.3 | 64.7 | 19.2 | -1.4 |
| | | 300 | 94.1 | 51.7 | 39.8 | -2.6 |
| | | 325 | 97.7 | 30.9 | 63.9 | -2.8 |
| | | 350 | 99.1 | 16.1 | 69.7 | -13.2 |
| 7b | CAT5 | 275 | 88.3 | 66.8 | 21.2 | -0.1 |
| | | 315 | 97.3 | 22.8 | 60.2 | -14.3 |
| | | 350 | 99.8 | 1.2 | 25.4 | -73.2 |

### Example 8: Catalyst evaluation in upgrading of light cycle oil

The following studies are conducted on a light cycle oil (LCO) diesel feed stream which is previously hydro-treated using a conventional CoMo catalyst until a sulphur content of 32 ppm is obtained. Catalysts tested are first diluted with carborundum at a ratio 1:1, in the form of monolithic blocks or in the form of extrudates (size 1.5 - 2 mm), and are activated in situ before testing according to the following procedure:
- drying: 120°C, 1 hour, nitrogen flow (600 normal cubic centimetres per minute, Ncc/min)
- reduction: 400° C, 2 hours, hydrogen flow (600 Ncc/min), 6000 kPa
- stabilisation: 285°C, 12-48 hours, feedstock flow (hydrogen/oil = 600 normal cubic centimetres per cubic centimetre, Ncc/cc, liquid hourly space velocity, LHSV = 1 h⁻¹).

Tests are run at temperatures between 270 and 345°C under constant pressure of between 1000 to 10000 kPa, preferentially between 3000 and 8000 kPa and most preferentially between 5000 and 7000 kPa, with constant hydrogen injection rate ratio hydrogen/oil) and space velocity. The catalytic systems according to the invention are tested and compared with CAT 5 (catalyst prepared according to US patent No. 5,308,814). All catalysts are assessed as a percentage of saturation of aromatic compounds (HPLC chromatography), cetane index (calculated according to the norm ASTM-D-4737) and as the formation of light fractions (cracking).

**- Table VI -**

| Operating conditions for catalytic evaluation | |
|---|---|
| Pressure (kPa) | 6000 |
| H₂/hydrocarbon (Ncc/cc) | 600 |
| Liquid Hourly Space Velocity (LHSV) (h⁻¹) | 1 |
| Temperature (°C) | 265 - 330 |
| Stabilisation at 285°C 12 - 48 h | H₂/hydrocarbon 600 Ncc/cc, LHSV = 1 h⁻¹ |

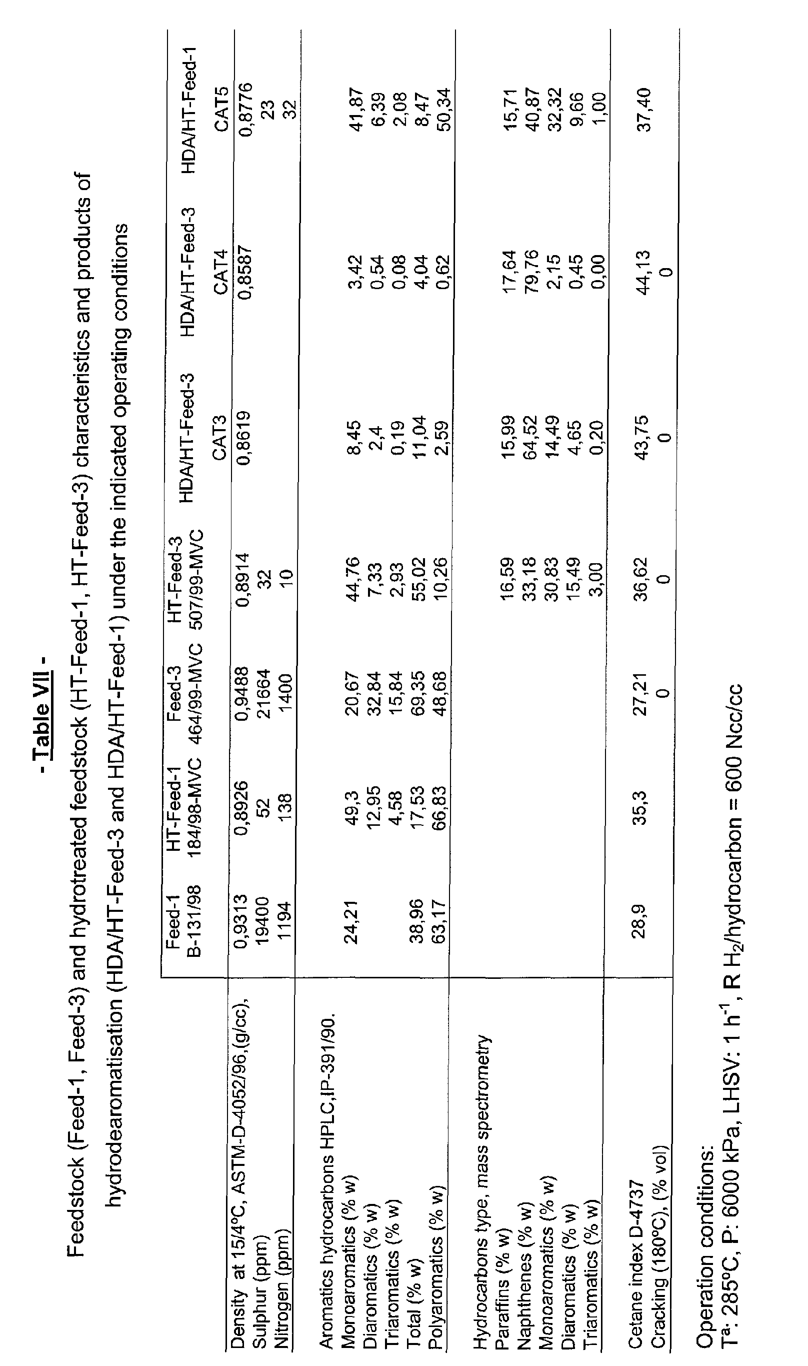

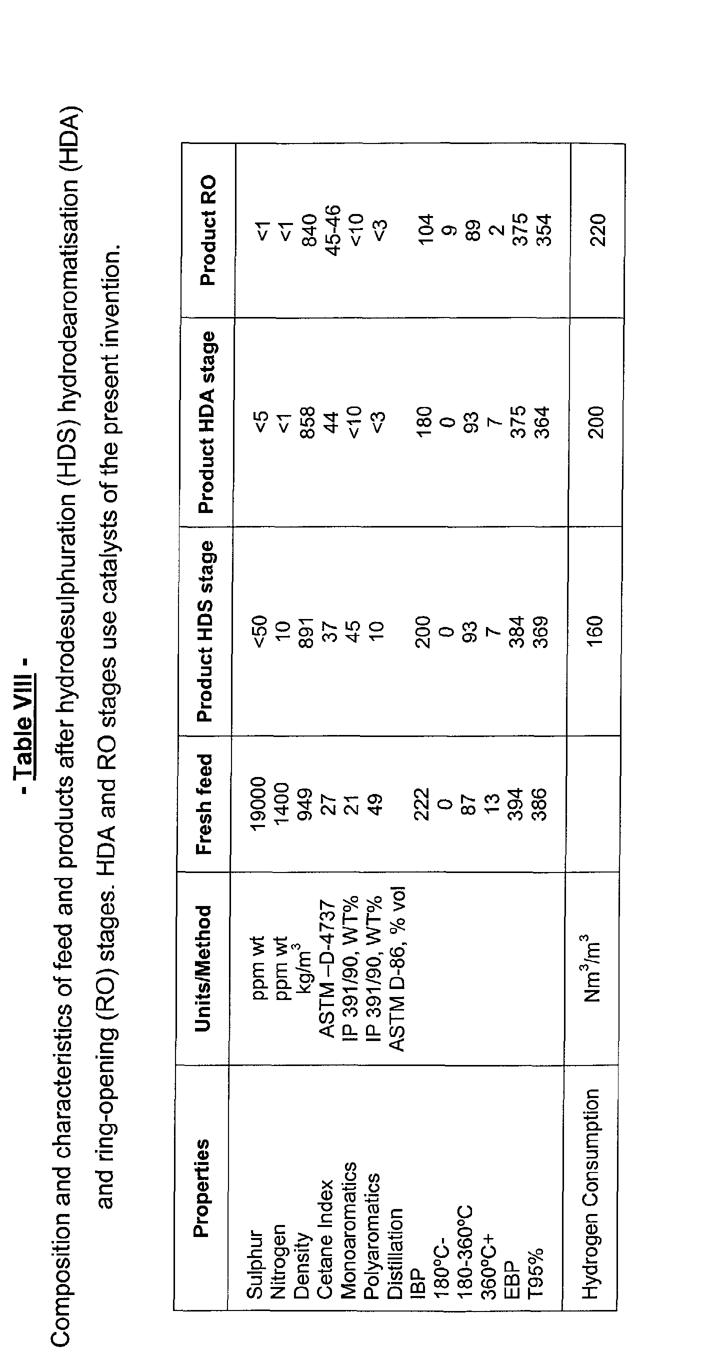

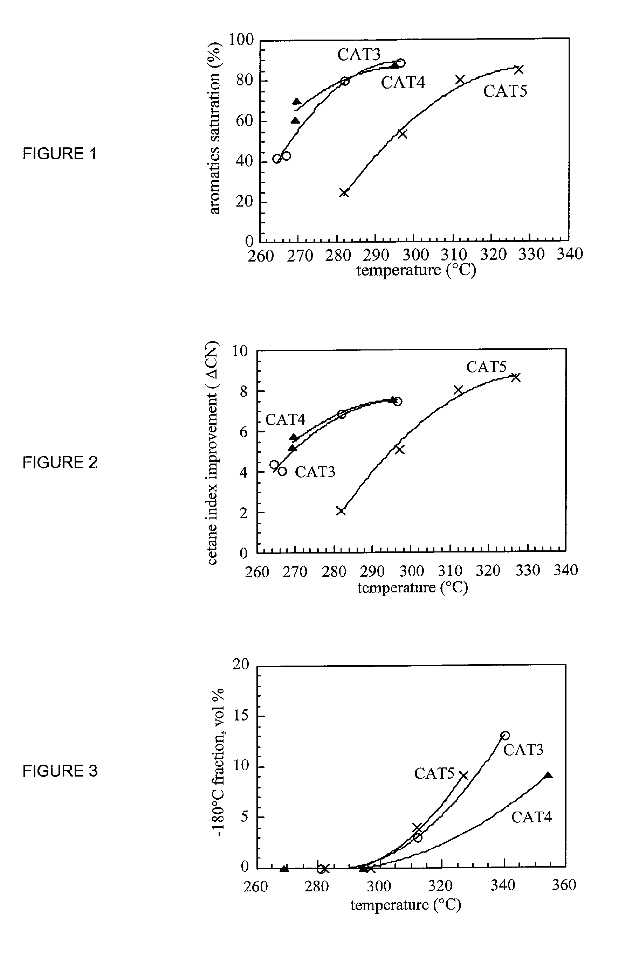

The improvement of the feed in terms of aromatics saturation, increase in cetane number and formation of light fractions is illustrated in Figures 1 - 3 for CAT 3 and CAT4. In these figures, comparative results are provided for CATS.
Figure 1: Percent aromatics saturation and comparison with CAT 5
Figure 2: Increase of cetane number of feed given by CAT3 and CAT4 compared with CATS
Figure 3: Percent cracking products given by CAT3 and CAT 4 compared with comparative example CATS

Particularly good results are obtained with CAT 3 and CAT 4 at 300°C. At this temperature, 95 % of aromatic compounds have been saturated. No products of non-selective cracking reaction to light fractions are obtained. With CAT 5 (reference catalyst), at a temperature of 300°C, only 55 % of aromatic compounds have been saturated and cracking reaction products are observed.

Maximum activity for CAT 5 is observed at 330°C with only 90 % of saturated aromatic compounds. Moreover, about 10 % of non-selective cracking reaction products are observed.

Increase of cetane number at 300° C is about 7.5 points, which corresponds to an increase of 21 % with respect to the feed using CAT 3 and CAT 4. With CAT 5 at the same temperature, an improvement of only about 5 points is obtained, corresponding to an increase of about 13 % with respect to the feed.

It should be clearly understood that the invention defined by the appended claims is not limited to the specific embodiments indicated in the above description, but rather encompasses all possible variants, which depart neither from the scope nor from the spirit of the present invention.

## Claims

1. Process of preparation of silicon-based multifunctional catalytic systems comprising the steps of:
a) adding a hydrolysable silicon-containing compound to a solution of one or more surface active agent(s) in an appropriate concentration, optionally comprising another metallic- or non-metallic-containing compound to provide hetero-atom doped, partially substituted silica, and optionally one or more organic or inorganic additive(s) and adjusting the pH to an appropriate value;
b) optionally placing the obtained solution under vacuum until a gel is obtained or, alternatively, stirring the precipitate formed;
c) optionally submitting the obtained gel or powder to hydrothermal treatment;
d) drying the gel or precipitate formed;
e) withdrawing the surface-active agent so that a catalytic support is obtained; and
f) intimately admixing one or more metal of the groups 8, 9 and 10 of the periodic classification of the elements into the catalytic support, this very step possibly being included within step a).

2. Process according to claim 1 in which the pores of the support have an average diameter of about 1.4 to about 2.0 nm and/or average diameter between about 2 and about 5 nm.

3. Process according to claim 1 or claim 2, wherein the surface-active agent is a non-ionic surface-active agent.

4. Process according to any of the preceding claims, wherein the porous support comprises silica and another oxide of a metallic or non-metallic element S in a ratio Si/S of about 1 and about 100, preferably of between about 2 and about 50.

5. Process according to any of the preceding claims, wherein the porous support is a silicoaluminate (Si/Al) or a silicozirconate (Si/Zr).

6. Process according to claim 5, wherein the Si/Al ratio is comprised between about 5 and about 40, preferably about 15 and about 25, for example about 20.

7. Process according to claim 5, wherein the Si/Zr ratio is comprised between about 2 and about 20, preferably about 5 and about 10, for example about 5.

8. Process according to any of the preceding claims further comprising the addition of an organic and/or inorganic additive.

9. Process according to any of the preceding claims wherein the catalytic metal is chosen from nickel, rhodium, palladium, platinum, ruthenium and iridium, more preferably palladium, rhodium and platinum, and mixtures thereof.

10. Process according to any of the preceding claims wherein the catalytic metal is a mixture of palladium and platinum or a mixture of palladium and rhodium.

11. Process according to any of the preceding claims wherein the intimately admixing of metals is an ionic exchange reaction or a direct impregnation reaction.

12. A multifunctional silicon-based porous catalytic system comprising:
- at least one porous catalytic support structurally comprising silica and at least one other metal or non-metal oxide chosen from aluminium, zirconium, and boron, said heteroatom-doped silica catalytic support being synthesised together with one or more surface active agents, provided that the surface-active agent useful in the preparation of a silicoaluminate porous support is a non-ionic surface-active agent;
- and at least one or more catalyst chosen from among metallic elements of columns 8, 9 and 10 of the periodic table of the elements.

13. A silicon-based porous catalytic system according to claim 12, wherein the average diameter of the pores of the support has a value of from about 1.4 to about 2 nm and/or from about 2 nm to about 5 nm.

14. A silicon-based porous catalytic system according to claim 12 or 13 having a specific acidity, expressed as the number of µmoles of ammonia (NH₃), which are chemically adsorbed per gram of catalytic support, of 200 to 600, preferably of 250 to 500 µmol NH₃/g.

15. A silicon-based porous catalytic system according to any of claims 12 to 14 wherein the porous support comprises silica and another oxide of a metallic or non-metallic element S in a ratio Si/S of about 1 and about 100, preferably of between about 2 and about 50.

16. A silicon-based porous catalytic system according to any of claims 12 to 15, wherein the porous support is a silicoaluminate or a silicozirconate porous material.

17. A silicon-based porous catalytic system according to any of claims 12 to 16, wherein the Si/Al ratio is comprised between about 5 and about 40, preferably about 15 and about 25, for example about 20.

18. A silicon-based porous catalytic system according to any of claims 12 to 16, wherein the Si/Zr ratio is comprised between about 2 and about 20, preferably about 5 and about 10, for example about 5.

19. A silicon-based porous catalytic system according to any of claims 12 to 18, wherein the catalytic metal is chosen from nickel, rhodium, palladium, platinum, ruthenium and iridium, more preferably palladium, rhodium and platinum, and mixtures thereof.

20. A silicon-based porous catalytic system according to any of claims 12 to 19, wherein the catalytic metal is a mixture of palladium and platinum or a mixture of palladium and rhodium.

21. A silicon-based porous catalytic system according to any of claims 12 to 20, wherein the total amount of metals is advantageously comprised between 0.01% and 10% by weight of the porous support, preferably between 0.1% and 5% by weight, and more preferably between 0.5% and 2% by weight.

22. A silicon-based porous catalytic system according to any of claims 12 to 21, comprising a silicoaluminate-based porous catalytic support and at least one catalytic material with one or more of the following characteristics taken alone or in combination:
- the Si/Al molar ratio is comprised between 5 and 40, preferably 15 and 25, for example 20;
- the surface-active agent used in the preparation of the support is a non-ionic surface-active agent;
- the average diameter of the pores has a value from about 1.4 to about 2.0 nm (supermicroporous material) and/or from about 2 nm to about 5 nm (mesoporous material);
- the catalytic material comprises palladium and platinum or rhodium in an overall amount of between 0.1% and 5% by weight, and more preferably between 0.5% and 2% by weight of the catalytic support, and with a Pd/Pt molar ratio of between 4:1 to 6:1 or a Pd/Rh molar ratio of about 1:1;
- the catalytic system shows an acidity level of 200 to 600 µmol NH₃/g, more preferably between 250 and 500 µmol NH₃/g.

23. A silicon-based porous catalytic system according to any of claims 12 to 21, comprising a silicozirconate-based porous catalytic support and at least one catalytic material with one or more of the following characteristics taken alone or in combination:
- the Si/Zr molar ratio is comprised between 2 and 20, preferably 5 and 10, for example about 5;
- the surface-active agent used in the preparation of the support is a non-ionic or ionic surface-active agent;
- the average diameter of the pores has a value from about 1.4 nm to about 2.0 nm (supermicroporous material) and/or from about 2 nm to about 5 nm (mesoporous material);
- the catalytic material comprises palladium and platinum or rhodium in an overall amount of between 0.1% and 5% by weight, and more preferably between 0.5% and 2% by weight of the catalytic support, and with a Pd/Pt molar ratio of between 4:1 to 6:1 or a Pd/Rh molar ratio of about 1:1;
- the catalytic system shows an acidity level of 200 to 600 µmol NH₃/g, more preferably between 250 and 500 µmol NH₃/g.

24. A silicon-based porous catalytic system according to any of claims 12 to 22, comprising a silicoaluminate support having a Si/Al molar ratio of about 20, prepared using a non-ionic surface-active agent, and further comprising a mixture of palladium and platinum in a molar ratio of between 4:1 to 6:1, the overall content of metal being 1 to 2% by weight of the catalytic support.

25. A silicon-based porous catalytic system according to any of claims 12 to 22, comprising a silicoaluminate support having a Si/Al molar ratio of about 20, prepared using a non-ionic surface-active agent, and further comprising a mixture of palladium and rhodium in a molar ratio of about 1:1, the overall content of metal being 1 to 2% by weight of the catalytic support.

26. A silicon-based porous catalytic system according to any of claims 12 to 21 or 23, comprising a silicozirconate support having a Si/Zr molar ratio of about 5, prepared using an ionic surface-active agent, and further comprising a mixture of palladium and platinum in a molar ratio of about 6:1, the overall content of metal being 1 % by weight of the catalytic support.

27. Use of a silicon-based porous catalytic system according to claims 12 to 26 or substantially prepared according to the process of any of claims 1 to 11, as a catalyst in the reactions of hydrogenation and/or decyclisation of (poly)aromatic compounds.

28. Use according to claim 27 wherein the (poly)aromatic compounds are components of diesel fuels.

29. Catalytic process of hydrogenation and/or decyclisation of diesel fuels using a catalytic system substantially obtained by the process as claimed in claims 1 to 12.

30. Catalytic process of hydrogenation and/or decyclisation of diesel fuels, using a catalytic system according to any of claims 12 to 26.

31. Catalytic system according to any of claims 12 to 26 useful in increasing the cetane number of diesel fuels.

32. Diesel fuel substantially obtained with the catalytic process according to claim 29 or 30, the cetane number of which being increased by about 20% to about 25% compared with that of the hydrotreated feed at 300°C.
